# EUROPEAN PATENT SPECIFICATION

(11) **EP 2 863 779 B1**
(45) Date of publication and mention of the grant of the patent: **14.11.2018**
(21) Application number: 13807877.9
(22) Date of filing: 20.06.2013
(51) Int. Cl.: A47J 37/01, A21B 3/13, A47J 37/06, F24C 15/16

(54) **ADJUSTABLE ROASTING PAN**
EINSTELLBARE RÖSTPFANNE
PLAQUE À RÔTIR RÉGLABLE

(30) Priority: 21.06.2012 DK 201270352
(43) Date of publication of application: 29.04.2015
(73) Proprietor: Taj, Staffan, 2200 København N (DK)
(72) Inventor: Taj, Staffan, 2200 København N (DK)
(74) Representative: Tellefsen, Jens J.
(86) International application number: PCT/DK2013/050203
(87) International publication number: WO 2013/189501

(56) References cited:
- CN-A- 1 846 584
- DE-U1- 9 400 662
- US-A- 872 837
- US-A- 902 904
- US-A- 902 904
- US-A- 2 223 074
- US-A- 2 627 801
- US-A- 2 627 801
- US-A- 2 925 933
- US-A- 2 925 933
- US-S1- D 564 827

## Description

### Field of the Invention

The present invention concerns a roasting pan including at least one first part with at least one first open end and at least one second part with at least one second open end, wherein the first part includes a bottom and at least one side face connected to the bottom and to an upper edge, wherein the second part includes a bottom and at least one side face connected to the bottom and to an upper edge, wherein the two parts are arranged such that the second part can be displaced in parallel relative to the first part in at least one direction when the two parts are assembled, wherein the edge of the first part includes at least one first stop device arranged near the first open end, and wherein the edge of the second part includes at least one second stop device arranged near the second open end, and wherein at least the first stop device includes an abutment face for abutting against the second stop device at an outer position.

The invention further concerns a method for assembling and separating a roasting pan including the following steps that an open end of a first part is turned towards an open end of a second part.

### Background of the Invention

Various designs of adjustable baking tins and roasting pans are described in publications. EP 0238437 A2 discloses such a roasting pan which includes two parts that may partly be pushed in over each other. Each part includes a bottom, three inclining side faces and an "open" side face. The parts are assembled by placing the two "open" side faces opposite each other and then pushing one part in over the other part.

The parts can only be adjusted within a narrow range as one part only has a length corresponding to about one third of the length of the other part, limiting the variation options for the user. This design cannot be used as a roasting pan for roasts, cake dough etc. as the area between the parts is not sealed, whereby the fluid mass/liquid will run out of the assembly. In order to use this design for cake dough, roasts etc., it is necessary to line the roasting pan with greaseproof paper, aluminium foil or similar before use. Furthermore, this design cannot be locked in the desired length, hampering movement of the roasting pan as it is either in danger of separating or be pushed more together than wanted.

DE 10019796 A1 discloses a roasting pan for an oven, the roasting pane including two parts that may partly be pushed in over each other. The parts are fastened to each other in the overlapping area via bolts/nuts or a click system. A sealing layer is provided between the layers. The two parts can be mutually displaced in order to attain the desired length and can then be fastened to each other via the bolts/click system. The sealing between the parts prevents liquid from penetrating out of the roasting pan.

It is a tedious process to adjust the length as it is necessary to loosen the bolts at first and then to tighten them again, which is also the case when the parts are to be separated for cleaning. It is also tedious to adjust the length of this design with the click system as it is necessary at first to release the two rows of pushbuttons after which the length can be adjusted. Furthermore, this design can only be adjusted within a narrow range, thus limiting the variation options for the user. As the bolts/nuts protrude from the bottom of this design, the roasting pan cannot be put on a plane surface such as a kitchen table without tilting or scratching the table.

Adjustable baking trays are known, such as model no. 3481 from Fackelmann GmbH, including two adjustable parts that may be pushed in over each other for adjusting the length. The lower part includes a series of recesses arranged on the flanges at the side of the baking tray, where the open ends of the recesses face the flanges on the upper part. The recesses are designed to receive a projection at the underside of the flanges on the upper part. The drawback of this design is that the parts do not fit tightly in the overlapping area and that the overlapping faces (bottoms) can bend/move away from each other, causing liquid in the baking tray to run out of the baking tray. The two parts cannot be separated, making cleaning of the overlapping area difficult.

US D564827 S discloses an adjustable baking tray consisting of two parts where the upper part is pushed in over the lower part. The upper part includes a series of recesses arranged on each of the flanges at the side of the baking tray, where the open ends of the recesses face the flanges on the lower part. The recesses are designed to receive a projection on the flanges on the lower part which is used for adjusting the length of the baking tray. A bead is provided at the underside of the bottom of the lower part. The drawback of this design is that the parts do not fit tightly in the overlapping area, causing liquids in the baking tray to run out of the baking tray. The two parts cannot be separated, making cleaning of the overlapping area difficult.

US 902904 A discloses a roasting pan including at least one first part with at least one first open end and at least one second part with at least one second open end, wherein the first part includes a bottom and at least one side face connected to the bottom and to an upper edge, where the second part includes a bottom and at least one side face connected to the bottom and to an upper edge, wherein the two parts are arranged such that the second part can be displaced in parallel relative to the first part in at least one direction when the two parts are assembled, wherein the edge of the first part includes at least one first stop device arranged near the first open end, and wherein the edge of the second part includes at least one second stop device arranged near the second open end, and wherein at least the first stop device includes an abutment face for abutting against the second stop device at an outer position.

### Object of the Invention

The object of the present invention is to provide a roasting pan which can be assembled and separated without use of tools or similar.

The object of the present invention is to provide a roasting pan where the parts fit tightly against each other when the parts are assembled.
The object of the present invention is to provide a roasting pan which has a very wide adjusting range.
The object of the present invention is to provide a roasting pan where the parts can be locked in the desired position.

### Description of the Invention

The present invention intends to solve the problems of the prior art by providing a roasting pan according to claim 1 which is characterised in that a sealing means is arranged in a depression at a side on the bottom and at least on a part of a side on the side face of one of the two parts, the sealing means including an abutment face for abutting against a side on the corresponding bottom and against at least part of a corresponding side on the side face of the other part, and that the sealing means is configured to fit tightly against the corresponding bottom when the two parts are assembled.

Hereby is provided an adjustable roasting pan which fits tightly and which can readily be assembled and separated without use of tools, in particular in connection with cleaning. Individual parts have a size which is suited for cleaning in a dishwasher. The roasting pan can advantageously be divided into two, three or four parts which can be assembled in a simple way. Furthermore, the roasting pan can be adjusted/telescoped in length and/or width within a hitherto unknown wide adjusting range which is defined by two stop devices, and the variations options are thereby increased for the user. Also, the volume and thereby the length/width of the roasting pan can be adapted to the amount/volume of the food placed in the roasting pan, even when the food has been placed in the roasting pan. A universal roasting pan that fits all types of ovens is hereby provided.

The first part fits closely along the bottom and the side face on the second part, whereby the entire volume of the roasting pan can be utilised in connection with relatively fluid liquids, such as cake dough and liquids in connection with roasts etc. It is thereby not necessary to line the internal part of the roasting pan with greaseproof paper, aluminium foil or similar. The sealing means may advantageously be loosened and thereby removed from the bottom for cleaning or replacement with a new sealing means. The sealing means can be retained in the recess by means of at least two elements engaging each other, e.g. via a click system, a dovetail joint or a finger joint.

In an embodiment according to the invention, the edge of the second part includes at least one cutout corresponding to the shape of the first stop device and arranged at a predetermined distance from the second open end.

Thereby is achieved a roasting pan which can be assembled and separated when the roasting pan is completely telescoped together and thereby put in its in inner position. This entails that the roasting pan can readily be assembled and separated just by placing the stop device on the second part opposite the cutout on the first part.

Moreover, the cutout is adapted to the design of the stop device on the second part, thus maintaining the strength of the edge.

In a particular embodiment according to the invention, at least one of the stop devices includes a contact surface arranged at the opposite side of the abutment face, the stop device having a deformable design such that the contact surface can be brought into temporary contact with the second stop device when assembling the parts.

Thereby is achieved a roasting pan which can be assembled and separated either when the roasting pan is in inner position or completely telescoped out (its outer position). This means that the roasting pan can be assembled easily and rapidly in one way and then separated in the other way, or vice versa. This is advantageous when the roasting pan is to be cleaned after use.

In a particular embodiment according to the invention, at least one of the parts includes a plurality of stop devices arranged along the edge, where at least one of the stop devices has a deformable design and includes an abutment face that can be brought to abut on the second stop device at the outer position.

The outer position of the roasting pan can hereby be adjusted and thereby adapted to the needs of the individual user so that the roasting pan cannot be telescoped farther out than the internal width of the oven. Also, the inner position of the roasting pan can be adapted to the needs of the individual user, either by bending the wanted stop device at the first part towards the side face, or by bending the stop device at the other part of the side face. The free end of the stop device on the first device can advantageously be bent such that it stops the movement of the first part and functions as a lower guide rail for the flange (the edge) of the first part as well. The free end of the flange section on the second part may advantageously be designed as a flange section facing the side face. The movement of the first part is hereby controlled and thereby stabilised as the edge of the first part is supported partly by the upper flange section and partly by the lower flange section on the second part.

In an embodiment according to the invention, the edge of at least one of the parts comprises at least one flange section, and at least one locking means is arranged in the flange section.

The parts can hereby be locked in the desired position or at one of the stop positions such that the roasting pan has the same length/width in connection with use. The roasting pan can also be unlocked and displaced/telescoped to a new position if required with regard to the amount of food in the roasting pan.

In a particular embodiment according to the invention, the second part includes a first locking means arranged in a flange section, the first locking means having deformable design and including a contact face which can be brought in contact with a periphery of a flange section of the first part arranged at the open end when the first part is moved relative to the second part in the at least one direction.
The locking device can also function as a safety device which ensures that the stop device on the first part can be disposed opposite the cutout on the second part only when the safety device has been activated, whereby the roasting pan can be disassembled. It is hereby prevented that the roasting pan can be separated inadvertently, and possible waste of food and scalding can be avoided.

In a second particular embodiment according to the invention, the second part includes at least one second locking means having a deformable design and which includes an abutment face for abutting against at least one third locking means arranged at a flange section of the first part.

Adjustment of the length/width of the roasting pan can hereby be performed either in a plane perpendicular to the bottom or in a plane parallel with the bottom. By placing the locking means on the two flange sections which are substantially parallel with the side face, there is achieved the advantage that possible deformations of the flange sections in the edges do not influence the sealing between the side faces and the bottoms of the two parts. Moreover, the stop device on the first part or the second part can constitute the outermost unit in the locking means which e.g. can be designed as a click system. A stepwise adjustment of the length/width of the roasting pan can hereby be performed. By activating/plastic deforming one of the locking means on the second part, the outer position (or inner position) of the roasting pan, and thereby the width of the adjusting range, can be adapted to the type of oven in question.

The present invention provides for solving the problems of the prior art by providing a method for assembling and separating a roasting pan, characterised in that the first part is disposed in the same plane as the second part, after which the first part is moved in a direction parallel with and partly across the second part, and that a first stop device on the first part is moved past a second stop device on the second part. In a second embodiment, the first part is disposed in a plane parallel with the second part and across the second part, after which the first part is moved in a direction perpendicular to and down on the second part, whereafter the first part is moved in a second direction parallel with and partly away from the second part.

Hereby is achieved a roasting pan which can be assembled and separated in two different ways which is often desirable in connection with cleaning of the roasting pan, as the pan can be separated/disassembled just by operating the stop devices on the first part whereby compressing the roasting pan at first in order to separate it is avoided. The roasting pan can also be assembled and separated/disassembled in an easy and simple way without use of tools.

### Description of the Drawing

The invention is described in the following with reference to the drawing, wherein:
- Fig. 1: shows an exemplary embodiment of the roasting pan according to the invention, as seen from above;
- Fig. 2: shows the roasting pan shown on Fig. 1, as seen from the side;
- Fig. 3: shows an exploded view and a cross-section of the roasting pan shown in Fig. 1;
- Fig. 4: shows the same cross-section of the roasting pan as in Fig. 3 with the parts assembled; and
- Fig. 5: shows a cross-section of one side of the roasting pan where the parts are assembled.

In the explanation of the Figures, identical or corresponding elements will be provided with the same designations in different Figures. Therefore, no explanation of all details will be given in connection with each single Figure/embodiment.

### Detailed Description of Embodiments of the Invention

By the term "roasting pan" is meant any type of tray or tin which can be used in an oven for roasting, baking or the like, including ovenproof dishes, roasting pans, baking trays with raised edges/sides, baking tins and other types of dishes, tins and the like, be they disposable or for repeated use.

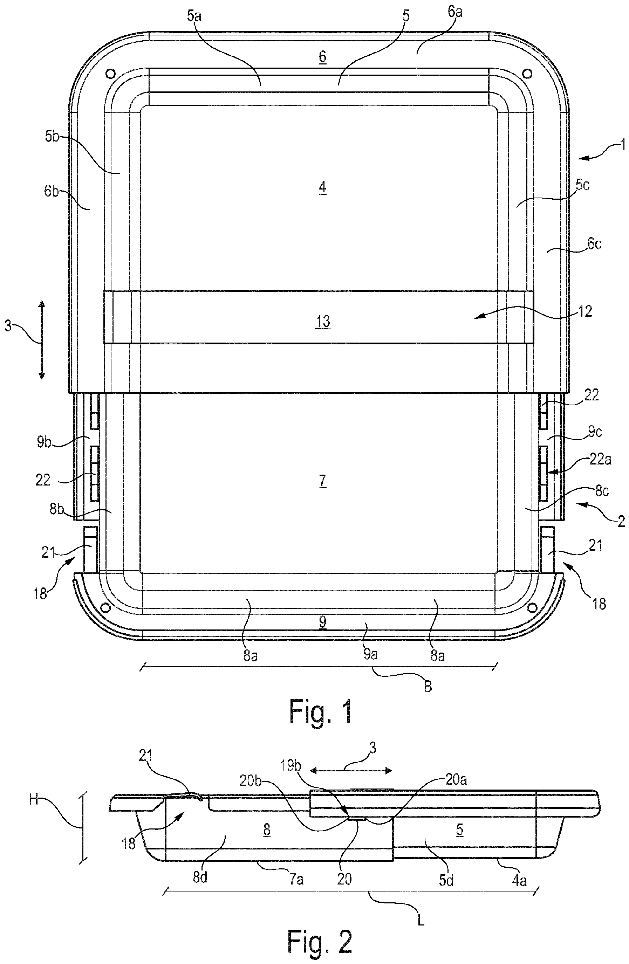

Figs. 1-2 show an exemplary embodiment of the roasting pan according to the invention where the roasting pan includes two or more parts 1, 2, each part 1, 2 designed such that the parts 1, 2 can be mutually displaced in at least one direction (marked by arrows 3). The parts 1, 2 can be separated and assembled by means of corresponding means arranged on at least one first part 1 and at least one second part 2, respectively. When assembled, the parts 1, 2 together form an adjustable roasting pan with adjustable volume as shown in Figs. 1-2, where the volume is defined by the length L, width B and height H of the roasting pan. The volume and thereby the length L and/or width B can be adjusted at least by moving the first part 1 relative to the second part 2, or vice versa, in at least one certain direction.

In a first embodiment, the roasting pan includes a first part 1 and a second part 2 as shown in Figs. 1-2. The first part 1 includes a bottom 4 connected to at least one side face 5 which in turn is connected to an edge 6 in the form of a flange. The bottom 4 has an outer side 4a and an inner side 4b. The bottom can be connected to three side faces 5a, 5b, 5c which are interconnected and form a U-shaped side face as shown on Fig. 1. The side faces 5 can be arranged perpendicularly to the bottom 4 be disposed inclining at a given angle relative to the bottom 4 and extending away from the bottom 4. The side faces 5 include an outer side 5d and an inner side 5e. The side faces 5 can be connected to three side edges 6a, 6b, 6c which are interconnected and form a U-shaped edge as shown on Fig. 1.

The second part 2 includes a bottom 7 connected to at least one side face 8 which in turn is connected to an edge 6 in the form of a flange. The bottom 7 includes an outer side 7a and an inner side 7b. The bottom 7 can be connected to three side faces 8a, 8b, 8c which are interconnected and form a U-shaped side face as shown on Fig. 1. The side faces 8 can be arranged perpendicularly to the bottom 7 or be disposed inclining at a given angle relative to the bottom 7 and extending away from the bottom 7. The side faces 8 include an outer side 8d and an inner side 8e. The side faces 8 can be connected to three side edges 9a, 9b, 9c which are interconnected and form a U-shaped edge as shown on Fig. 1.

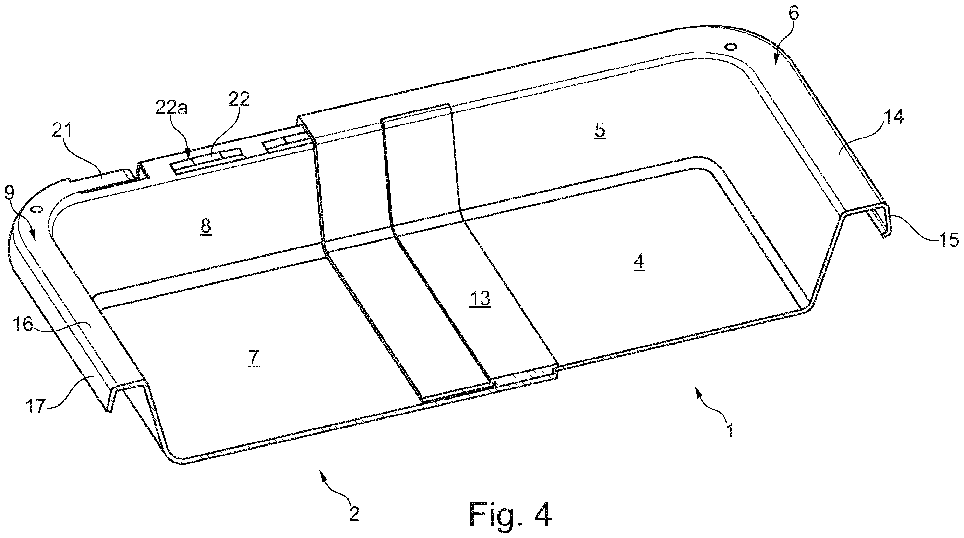

The parts 1, 2 include at least one open end 10, 11 arranged at the free end of the bottom 4, 7, the side face 5, 8 and the edge 6, 9, as shown on Fig. 4. The design of the open end 10 corresponds to the design of the open end 11 such that the outer side 4a, 5d on the first part 1 functions as an abutment face for abutting on the inner side 7b, 8e on the second part 2 when the parts 1, 2 are assembled and moved relative to each other as shown on Fig. 4. The outer side 7a and to some extent the outer side 4a can function as an abutment face for abutting against an external plane surface, such as a table top, a kitchen table or an oven grating.

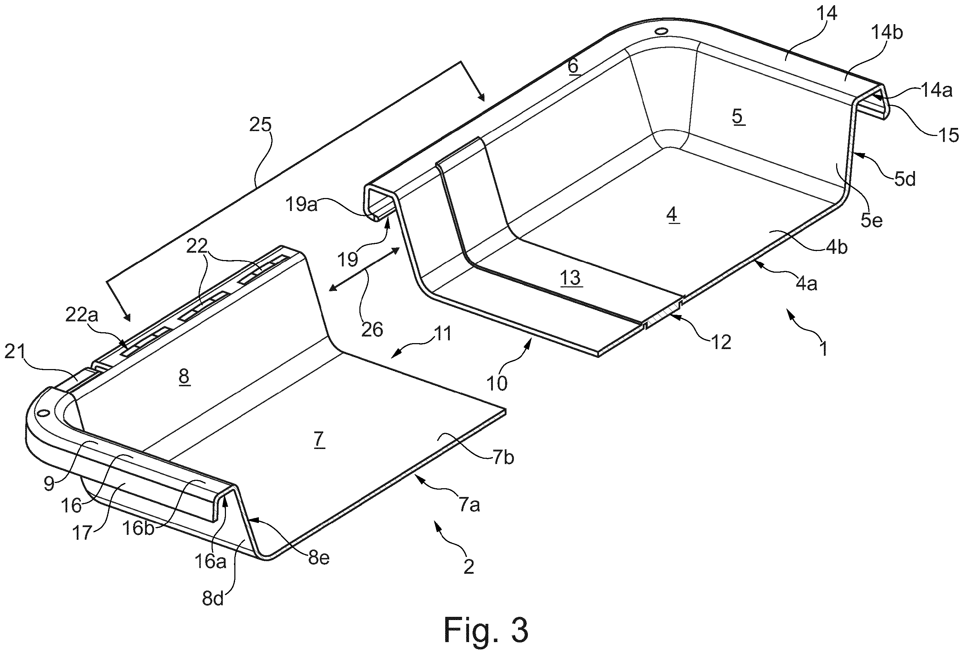

Figs. 3- 4 show a first embodiment of the roasting pan where the open end 10, 11 is arranged perpendicularly to the longitudinal direction of the roasting pan. In a second embodiment (not shown), the open end 10, 11 is arranged in parallel with the longitudinal direction of the roasting pan. In a third embodiment (not shown), the roasting pan can include three, four or more parts 1, 2 where the open end 10, 11 as well as at least a second open end (not shown) can be connected to the open end 10, 11 and arranged perpendicularly to or disposed at a given angle relative to the open end 10, 11. The parts 1, 2 can hereby be mutually displaced in at least two different directions, e.g. in length L and in width B.

The bottom 4 includes a recess 12 arranged at the outer side 4a as shown in the cross-section in Figs. 3-4. The recess 12 can be disposed in or near the open end 10 and extend along the open end 10. The recess 12 can extend farther up along the side face 5 and possibly along part of the edge 6. The recess 12 includes at least one abutment face for abutting on a sealing means 13 provided in the recess 12. The sealing means 13 includes at least one abutment face for abutting on the inner side 7b and at least part of the inner side 8e of the second part 2 when the parts 1, 2 are assembled such that the parts 1, 2 fits tightly when they are assembled. Alternatively, the recess 12 and the sealing means 13 can be arranged at the inner side 7b, 8e of the second part 2. The sealing means 13 can be retained in the recess 12 by means of known fastening techniques, such as glue, adhesive, friction or other known fastening technique. The sealing means 13 can include at least one projection in the form of a key or a pin (possibly with head) corresponding to at least one cutout in the form of a groove or a pin hole/slot in the recess 12, whereby the sealing means 13 can be removed in connection with cleaning or be replaced by a new sealing means 13. The sealing means 13 can be made of silicon, polymer, rubber or other suitable material. Alternatively, the bottom 7 can include a second sealing means (not shown) which can be arranged at the inner side 7b and include at least one abutment face for abutting on the abutment face on the sealing means 13.

One or more assembling means (not shown) can be arranged on at least the first part 1, e.g. at the bottom 4. One or more assembling means (not shown) can be arranged on at least one second part 2, e.g. at the bottom 7, corresponding to the first assembly means.. The first assembly means includes at least one abutment face for abutting on at least the second assembly means, and vice versa. The two assembly means can be designed as a pin/fin and a pinhole/cutout/slot, or other suitable assembling arrangement. One or more sealing means can be arranged in the assembly means and include at least one abutment face for abutting on at least one of the assembly means and/or at least one of the other sealing means. The sealing means are arranged on the parts 1, 2 such that they continually engage and fit tightly when the parts 1, 2 are assembled and when the parts 1, 2 move in relation to each other.

In a simple embodiment, the edge 6, 9 can be designed as a single flange extending away from the side face 5, 8 in a plane parallel with the bottom 4, 7. In a preferred embodiment, the edge 6, 9 is designed as a flange which includes a first flange section 14, 16 and a second flange section 15, 17. The first flange section 14, 16 can be designed as a horizontal flange which, as seen relative to the bottom 4, 7, includes a lower side 14a, 16a and an upper side 14b, 16b. The second flange 15, 17 can be designed as a vertical flange extending away from the first flange section 14, 16 and down towards the plane formed by the bottom 4, 7. The flange section 15, 17 can extend away from the first flange section 14, 16 in a plane parallel with the side face 5, 8 or be inclined at a given angle relative to the bottom 4, 7. In an embodiment, the edge 6, 9 can be designed such that the roasting pan can be suspended freely from a set of oven ribs (not shown) and/or be placed on an oven grating/oven tray (baking tray) in an oven (not shown).

The edge 9 on the second part 2 can include at least one cutout 18 which can be arranged on the first flange section 16 and/or the second flange section 17 at a predetermined distance from the open end 11. The form of the cutout 18 corresponds to the form of at least one stop device 19 arranged on the first part 1. In a preferred embodiment, a first cutout 18 is arranged at the edge 9b and a second cutout 18 is arranged at the edge 9c. The second part 2 includes at least one second stop device 20 that can be arranged at the edge 9, e.g. on the second flange section 17. The stop device 20 includes at least one abutment face for abutting on the stop device 19, and vice versa. The stop device 19 on the first part 1 can be arranged in the free end of the flange section 15 in or near the open end 10. In a preferred embodiment, a first stop device 19, 20 is arranged at the edge 6b, 9b and a second stop device 19, 20 is arranged at the edge 6c, 9c.

In an embodiment, the stop device 19 can be arranged as a pin with a head at the end which is disposed at the lower side 14a and extends away from the flange section 14 and in a plane approximately perpendicular to the plane formed by the bottom 4. In this embodiment, the flange part 16 can include a groove where one end is constituted by the cutout 18, and the second end includes an end disposed close to the open end 11. By assembling the parts 1, 2, the head on the pin is moved through the cutout 18 such that the head is moved along the lower side 16a of the flange section 16 when the first part 1 is moved relative to the second part 2. The two flange sections 14, 16 and thereby the parts 1, 2 are hereby pressed together such that the sealing device 13 fits tightly all the time.

The stop device 19, 20 can include at least one contact surface 19a, 20a, e.g. an inclining face, which can be arranged opposite to the abutment face 19b, 20b for abutting on the stop device 19, 20. The edges 6, 9, at least the flange sections 15, 17 and the stop devices 19, 20 can have a resiliently deformable design. By the term "resiliently deformable" is meant a shape/design which is deformed by external application of force and which returns to its initial position when the application of force ceases. In an embodiment, the stop device 19 can be designed as a pin/projection extending away from the flange section 15 and against the side face 5. In an embodiment, the stop device 20 can be designed as a pin disposed in continuation of the free end on the flange section 17 and extending downwards against the plane formed by the bottom 7. Alternatively, the pin 20 can be disposed in a cutout in the flange section 17 and be connected to the flange section 16.

In an embodiment, the edge 6 and/or the edge 9, e.g. the flange section 15 and/or the flange section 17, include two or more stop devices 19, 20 arranged in a row along the edge 6b, 6c, 9b, 9c. One or more of the stop devices 19, 20 and/or the free end of the stop device 19, 20 can have a plastic deformable design whereby one or more of the stop devices 19, 20 can be bent in against the side face 5, 8 such that the position of the stop devices 19, 20 can be adjusted relative to each other and thereby the desired width/length of the roasting pan as well. By the term "plastic deformable" is meant a shape/construction which is deformed by external application of force and which does not return to its initial position when the application of force ceases.

The edge 9 on the second part 2 can include at least one locking means 21 that can be connected to at least one side face in the cutout 18 and/or the side face 8. In a preferred embodiment, a first locking means 21 is arranged at the edge 9b and a second locking means 21 is arranged at the edge 9c. The locking means 21 can have oblong, J-shaped, or L-shaped form as shown on Fig. 2 where the free end or at least part of its upper side functions as a contact surface for the part of the periphery of the flange section 14 which is disposed in the open end 10. The locking means 21 can be located either in the same plane as the flange section 16 or be substantially inclined with a given angle relative to the flange section 16 such that the free end or at least part of the locking means 21 is disposed in the same plane as the flange section 14 when the parts 1, 2 are assembled. The locking means 21 has a resiliently deformable design such that the locking means 21 in its rest position prevents the stop device 19 from being positioned opposite the cutout 18. Instead or in addition, the locking means 21 can have plastic deformable design such that the free part of the locking means 21 is bent relative to the flange section 16 towards its rest position in connection with using the roasting pan for the first time.

The edge 9 of the second part 2 can include one or more guide means 22 which can be arranged at the upper side 16b of the flange section 16, guiding the first part 1 across the second part 2. The guide means 22 can be designed as an elongated curving element or include a pin/projection where the curve/pin extends perpendicularly out from and away from the upper side 16b, and where both ends of the guide means 22 is connected to two opposing side faces in a cutout 22a arranged in the flange section 16. The upper side of the element or pin/projection operates as an abutment face on the lower side 14a of the flange section 14.

Alternatively, the guide means 22 can function as locking means where the design of the guide means 22 corresponds to the design of one or more locking means 23 arranged on the flange section 14, and where the locking means 22, 23 define a number of stop positions. The locking means 23 can be designed as a recess/pinhole (not shown) corresponding to the design of the curving element or the pin/projection. In a second embodiment, the locking means 22 can be designed as a number of plastic deformable elements which at one end are connected to a side face in the cutout 22a, and where the free end can be bent relative to the flange section 16 such that the free end can be disposed in the same plane as the flange section 14 or be brought in contact with the lower side 14a of the flange section 14. The locking means 23 can be designed as a recess/projection (not shown) including an abutment face for abutting on the free end of the locking means 22 which is arranged substantially at right angles to the lower side 14a. The locking means 22, 23 act as stop devices when the free end is brought in contact with the abutment face. The free end can have a resiliently deformable design such that the free end is always in contact with the lower side 14a when the parts 1, 2 are moved in relation to each other.

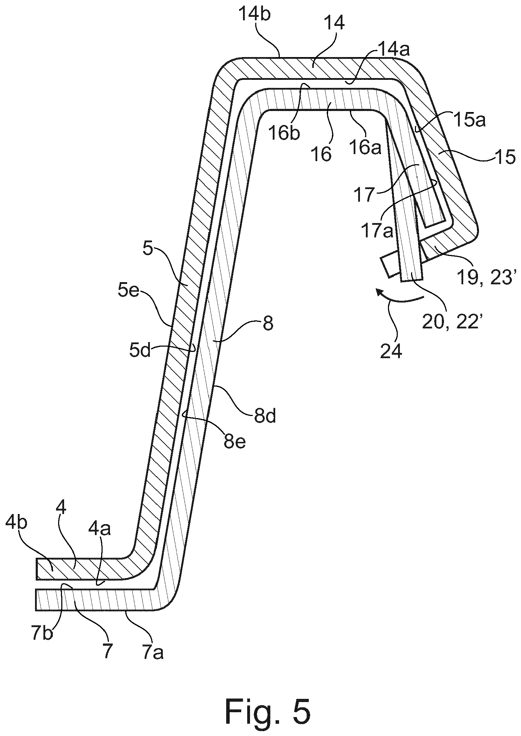

The locking means 22, 23 may instead be arranged on the flange section 15 and the flange section 17, respectively, as shown on Fig. 5. The locking means 22 can be designed as described above, and in a third embodiment be arranged at the mutually facing sides 15a, 17a when the parts 1, 2 are assembled. The locking means 22, 23 are designed such that they engage each other when the parts 1, 2 are moved relative to each other. At least one of the locking means 22, 23 and/or the flange sections 15, 17 have a resiliently deformable design whereby the locking means 22, 23 can be moved into and out of mutual engagement when moved between at least two stop positions.

In a fourth embodiment, the locking means 22, 23 can be arranged at the free ends of the flange sections 15, 17 as shown on Fig. 5. In this embodiment, the locking means 22' can have a resiliently deformable design and extend out and away from the free end of the flange section 17. Alternatively, the stop device 20 can constitute the locking means 22'. In this embodiment, the locking means 23' can be designed as a flange section as shown on Fig. 5 which extends out from the flange section 15 and faces the side face 5. The flange section 23' can include one or more cutouts 23a arranged along the free end of the flange section in which the locking means 22' can be located in its rest position as shown on Fig. 5. The stop device 19 can comprise part of the locking means 23'. The locking means 22', 23' can be designed such that the locking means 22' is only spring-biased at certain points/partly in a direction against the side face 5 (marked by the arrow 24) when moved between two stop positions.

A number of wings/pins (not shown) can be arranged at the free end of the flange section 15 in continuation of the stop device 19. The wings/pins may have plastic deformable design that may be bent against the side face 5 such that they extend entirely or partly beyond the locking means 22' in its rest position. The wings/pins can be used for retaining/locking the locking means 22' in a desired stop position and as further stop devices in connection with movement of the parts 1, 2 as well.

In an embodiment, the parts 1, 2 can be assembled by placing the first part 1 across the second part 2 such that the cutout 18 is disposed opposite the stop device 19. The first part 1 is then moved in a vertical movement 25 (relative to the second part 2) down towards the second part 2 such that the sealing means 13 is brought in contact with the second part 2 as shown on Fig. 4. The first part 1 can alternatively be angled relative to the second part 2 such that the stop device 19 partly faces downward against the cutout 18 before the parts 1, 2 are moved vertically down over each other in order to facilitate assembling. Then the roasting pan is displaced/telescoped from its inner position (not shown) to its outer position shown on Fig. 2 or to any other stop position there between via the locking means 22, 23, after which the locking means 21 returns or is bent to its rest position. The parts 1, 2 are separated by firstly activating/deforming the locking means 21, either by applying an external force or via the flange section 14, after which the first part 1 is disposed in the inner position of the roasting pan. The first part 1 is then moved in a vertical movement 25 (relative to the second part 2) away from the second part 2, and the stop device 19 is moved out of the cutout 18 as shown on Fig. 3. The first part 1 can be partly rotated/tilted about the open end 10 and away from part 1 before the parts 1, 2 are moved vertically away from each other in order to facilitate separation.

In another embodiment, the parts 1, 2 can be assembled by placing the first part 1 in continuation of the second part 2 such that the two open ends 10, 11 face each other. The first part 1 is then moved in a horizontal movement 26 (relative to the second part 2) in over the second part 2 such that the sealing means 13 is brought in contact with the second part 2 as shown on Fig. 4. The stop device 19 is moved past the stop device 20 by briefly applying an external force to the stop device 20, after which the stop device 20 returns to its rest position. Alternatively, the stop device 20 is operated by means of the stop device 19 whereby the two stop devices 19, 20 are brought out of their rest positions, and the stop device 19 slides past the stop device 20 via the contact faces 19a, 20a after which the two stop devices 19, 20 returns to their rest positions. The roasting pan can then be displaced/telescoped from its outer position as shown on Fig. 2 and to its inner position (not shown), or to any other stop position there between via the locking means 22, 23. The parts 1, 2 are separated, either via the cutout 18 as described above or by putting the first part 1 in the outer position of the roasting pane as shown in Fig. 2, after which the stop device 20 is applied an external force and the first part 1 is moved in a horizontal movement 26 (relative to the second part 2) away from the second part 2 as shown in Fig. 3. By this embodiment the cutout 18 can be omitted.

The parts 1, 2 can be made of a plastic deformable material, such as cupper, stainless steel, aluminium, cast iron or other suitable material. The surface of the parts 1, 2, especially the outer side 4a, 5d, 7a, 8d and the inner side 4b, 5e, 7b, 8e can be applied a protecting/friction reducing material, such as a non-stick coating or other suitable material. If the parts 1, 2 are made of metal, the edge 6, 9 can be made of a sufficiently thin layer such that an approximately resiliently deformable action is achieved while at the same time the edge maintains sufficient strength in order to carry the weight of the roasting pan and its contents.

The edge 6 and/or the edge 9 can include one or more visual identification markings (not shown) on the upper side 14b, 16b, indicating various adjusting options such as the width/length of a plurality of various ovens from one or more manufacturers. The identification markings can include a plurality of lines/embossings, possibly combined with a text or visual indication, e.g. in centimetres, of the length/width, e.g. in the range 33-66 cm. The identification markings can include one or more figures that indicate various adjustment options such as a number of predetermined lengths/widths. Other visual identification markings can be used for indicating various adjustment options for one or more oven types and/or oven makers.

## Claims

1. A roasting pan including at least one first part (1) with at least one first open end (10) and at least one second part (2) with at least one second open end (11), wherein the first part (1) includes a bottom (4) and at least one side face (5) connected to the bottom and to an upper edge (6), where the second part (2) includes a bottom (7) and at least one side face (8) connected to the bottom and to an upper edge (9), wherein the two parts (1, 2) are arranged such that the second part (2) can be displaced in parallel relative to the first part (1) in at least one direction (3) when the two parts (1, 2) are assembled, wherein the edge (6) of the first part (1) includes at least one first stop device (19) arranged near the first open end (10), and wherein the edge (9) of the second part (2) includes at least one second stop device (20) arranged near the second open end (11), and wherein at least the first stop device (19) includes an abutment face (19b) for abutting against the second stop device (20) at an outer position, **characterised in that** a sealing means (13) is arranged in a depression (12) at a side (4a) on the bottom (4), and at least on a part of a side (5d) on the side face (5) of one of the two parts (1, 2), the sealing means (13) including an abutment face for abutting against a side (7b) on the corresponding bottom (7) and against at least part of a corresponding side (8e) on the side face (8) of the other part (1, 2), and that the sealing means (13) is configured to fit tightly against the corresponding bottom (7) when the two parts (1, 2) are assembled.

2. A roasting pan according to claim 1, **characterised in that** the edge (9) of the second part (2) includes at least one cutout (18) corresponding to the shape of the first stop device (19) and arranged at a predetermined distance from the second open end (11).

3. A roasting pan according to claim 1 or 2, **characterised in that** at least one of the stop devices (19, 20) includes a contact surface (19a, 20a) arranged at the opposite side of the abutment face (19b, 20b), the stop device (19, 20) having a deformable design such that the contact surface (19a, 20a) can be brought into temporary contact with the second stop device (19, 20) when assembling the parts.

4. A roasting pan according to any of claims 1 to 3, **characterised in that** at least one of the parts (1, 2) includes a plurality of stop devices (19, 20) arranged along the edge (6, 9), that at least one of the stop devices (19, 20) has a deformable design and includes an abutment face (19b, 20b) that can be brought into contact with the second stop device (20, 19) at the outer position.

5. A roasting pan according to any of claims 1 to 4, **characterised in that** the edge (6, 9) of at least one of the parts (1, 2) includes at least one flange section (14, 15, 16, 17) and that at least one locking means (21, 22, 23) is arranged in the flange section (14, 15, 16, 17).

6. A roasting pan according to claim 5, **characterised in that** the second part (2) includes a first locking means (21) arranged in a flange section (16), the first locking means (21) having deformable design and including a contact face which can be brought in contact with a periphery of a flange section (14) of the first part (1) arranged at the open end (10) when the first part (1) is moved relative to the second part (2) in the at least one direction (3).

7. A roasting pan according to claim 5 or 6, **characterised in that** the second part (2) includes at least one second locking means (22) having a deformable design and which includes an abutment face for abutting against at least one third locking means (23) arranged at a flange section (15) of the first part (1).

8. A method for assembling and separating a roasting pan according to any of claims 1 to 7, including the following steps that an open end (10) of a first part (1) is turned towards an open end (11) of a second part (2), **characterised in that** the first part (1) is disposed at the same plane as the second part (2), after which the first part (1) is moved in a direction (26) parallel with and partly across the second part (2), and that a first stop device (19) on the first part (1) is moved past a second stop device (20) on the second part (2).

9. A method for assembling and separating a roasting pan according to any of claims 1 to 7, including the following steps that an open end (10) of a first part (1) is turned towards an open end (11) of a second part (2), **characterised in that** the first part (1) is disposed in a plane parallel with the second part (2) and across the second part (2), after which the first part (1) is moved in a direction (25) perpendicular to and down on the second part (2), whereafter the first part (1) is moved in a second direction parallel with and partly away from the second part (2).

## Patentansprüche

1. Röstpfanne, beinhaltend zumindest ein erstes Teil (1) mit zumindest einem ersten offenen Ende (10) und zumindest einen zweiten Teil (2) mit zumindest einem zweiten offenen Ende (11), wobei der erste Teil (1) einen Boden (4) und zumindest eine mit dem Boden und mit einem oberen Rand (6) verbundene Seitenfläche (5) beinhaltet, wobei der zweite Teil (2) einen Boden (7) und zumindest eine mit dem Boden und einem oberen Rand (9) verbundene Seitenfläche (8) beinhaltet, wobei die beiden Teile (1, 2) so angeordnet sind, dass der zweite Teil (2) parallel relativ zum ersten Teil (1) in zumindest einer Richtung (3) verschoben werden kann, wenn die beiden Teile (1, 2) zusammengesetzt sind, wobei der Rand (6) des ersten Teils (1) zumindest eine erste Stoppvorrichtung (19) beinhaltet, die nahe dem ersten offenen Ende (10) angeordnet ist, und wobei der Rand (9) des zweiten Teils (2) zumindest eine zweite Stoppvorrichtung (20) beinhaltet, die nahe dem zweiten offenen Ende (11) angeordnet ist, und wobei zumindest die erste Stoppvorrichtung (19) eine Anschlagfläche (19b) zum Anschlagen gegen die zweite Stoppvorrichtung (20) in einer äußeren Position beinhaltet, **dadurch gekennzeichnet, dass** ein Dichtungsmittel (13) in einer Vertiefung (12) an einer Seite (4a) auf dem Boden (4) und zumindest an einem Teil einer Seite (5d) auf der Seitenfläche (5) eines der beiden Teile (1, 2) angeordnet ist, wobei das Dichtungsmittel (13) eine Anschlagfläche zum Anschlagen gegen eine Seite (7b) auf dem entsprechenden Boden (7) und gegen zumindest einen Teil einer entsprechenden Seite (8e) auf der Seitenfläche (8) des anderen Teils (1, 2) beinhaltet, und dass das Dichtungsmittel (13) konfiguriert ist, um fest gegen den entsprechenden Boden (7) eingepasst zu sein, wenn die beiden Teile (1, 2) zusammengesetzt sind.

2. Röstpfanne nach Anspruch 1, **dadurch gekennzeichnet, dass** der Rand (9) des zweiten Teils (2) zumindest einen Ausschnitt (18) beinhaltet, der der Form der ersten Stoppvorrichtung (19) entspricht und in einem vorbestimmten Abstand von dem zweiten offenen Ende (11) angeordnet ist.

3. Röstpfanne nach Anspruch 1 oder 2, **dadurch gekennzeichnet, dass** zumindest eine der Stoppvorrichtungen (19, 20) eine Kontaktfläche (19a, 20a) beinhaltet, die auf der gegenüberliegenden Seite der Anschlagfläche (19b, 20b) angeordnet ist, wobei die Stoppvorrichtung (19, 20) eine verformbare Konstruktion aufweist, so dass die Kontaktfläche (19a, 20a) beim Zusammensetzen der Teile in temporären Kontakt mit der zweiten Stoppvorrichtung (19, 20) gebracht werden kann.

4. Röstpfanne nach einem der Ansprüche 1 bis 3, **dadurch gekennzeichnet, dass** zumindest eines der Teile (1, 2) eine Vielzahl von Stoppvorrichtungen (19, 20) beinhaltet, die entlang des Randes (6, 9) angeordnet ist, dass zumindest eine der Stoppvorrichtungen (19, 20) eine verformbare Konstruktion aufweist und eine Anschlagfläche (19b, 20b) beinhaltet, die in der äußeren Position mit der zweiten Stoppvorrichtung (20, 19) in Kontakt gebracht werden kann.

5. Röstpfanne nach einem der Ansprüche 1 bis 4, **dadurch gekennzeichnet, dass** der Rand (6, 9) zumindest eines der Teile (1,2) zumindest einen Flanschabschnitt (14, 15, 16, 17) beinhaltet und dass zumindest ein Verschlussmittel (21, 22, 23) in dem Flanschabschnitt (14, 15, 16, 17) angeordnet ist.

6. Röstpfanne nach Anspruch 5, **dadurch gekennzeichnet, dass** der zweite Teil (2) ein erstes Verschlussmittel (21) beinhaltet, das in einem Flanschabschnitt (16) angeordnet ist, wobei das erste Verschlussmittel (21) eine verformbare Konstruktion aufweist und eine Kontaktfläche beinhaltet, die mit einem Umfang eines Flanschabschnitts (14) des ersten Teils (1) in Kontakt gebracht werden kann, der am offenen Ende (10) angeordnet ist, wenn der erste Teil (1) in der zumindest einen Richtung (3) relativ zu dem zweiten Teil (2) bewegt wird.

7. Röstpfanne nach Anspruch 5 oder 6, **dadurch gekennzeichnet, dass** der zweite Teil (2) zumindest ein zweites Verschlussmittel (22) beinhaltet, das eine verformbare Konstruktion aufweist und das eine Anschlagfläche zum Anschlagen an zumindest ein drittes Verschlussmittel (23) beinhaltet, das an einem Flanschabschnitt (15) des ersten Teils (1) angeordnet ist.

8. Verfahren zum Zusammensetzen und Trennen einer Röstpfanne nach einem der Ansprüche 1 bis 7, beinhaltend die folgenden Schritte, dass ein offenes Ende (10) eines ersten Teils (1) zu einem offenen Ende (11) eines zweiten Teils (2) gedreht wird, **dadurch gekennzeichnet, dass** der erste Teil (1) in der gleichen Ebene wie der zweite Teil (2) angeordnet ist, wonach das erste Teil (1) in eine Richtung (26) parallel mit und teilweise über das zweite Teil (2) bewegt wird, und dass eine erste Stoppvorrichtung (19) auf dem ersten Teil (1) an einer zweiten Stoppvorrichtung (20) auf dem zweiten Teil (2) vorbei bewegt wird.

9. Verfahren zum Zusammensetzen und Trennen einer Röstpfanne nach einem der Ansprüche 1 bis 7, beinhaltend die folgenden Schritte, dass ein offenes Ende (10) eines ersten Teils (1) zu einem offenen Ende (11) eines zweiten Teils (2) gedreht wird, **dadurch gekennzeichnet, dass** der erste Teil (1) in einer Ebene parallel zum zweiten Teil (2) und über den zweiten Teil (2) angeordnet ist, wonach der erste Teil (1) in einer Richtung (25) senkrecht zu und nach unten auf den zweiten Teil (2) bewegt wird, woraufhin der erste Teil (1) in einer zweiten Richtung parallel mit und teilweise weg von dem zweiten Teil (2) bewegt wird.

## Revendications

1. Plaque à rôtir incluant au moins une première partie (1) avec au moins une première extrémité ouverte (10) et au moins une seconde partie (2) comportant au moins une seconde extrémité ouverte (11), dans laquelle la première partie (1) inclut un fond (4) et au moins une face latérale (5) reliée au bord inférieur et à un bord supérieur (6), où la seconde partie (2) inclut un fond (7) et au moins une face latérale (8) reliée au bord inférieur et à un bord supérieur (9), dans laquelle les deux parties (1, 2) sont agencées de telle sorte que la seconde partie (2) peut être déplacée parallèlement par rapport à la première partie (1) dans au moins une direction (3) lorsque les deux parties (1, 2) sont assemblées, dans laquelle le bord (6) de la première partie (1) inclut au moins un premier dispositif d'arrêt (19) agencé à proximité de la première extrémité ouverte (10), et dans laquelle le bord (9) de la seconde partie (2) inclut au moins un second dispositif d'arrêt (20) agencé à proximité de la seconde extrémité ouverte (11), et dans laquelle au moins le premier dispositif d'arrêt (19) inclut une face d'appui (19b) pour s'appuyer contre le second dispositif d'arrêt (20) au niveau d'une position extérieure, **caractérisée en ce qu'**un moyen d'étanchéité (13) est agencé dans un creux (12) au niveau d'un côté (4a) du fond (4), et au moins sur une partie d'un côté (5d) sur la face latérale (5) d'une des deux parties (1, 2), le moyen d'étanchéité (13) incluant une face d'appui pour s'appuyer contre un côté (7b) sur le fond correspondant (7) et contre au moins une partie d'un côté correspondant (8e) sur la face latérale (8) de l'autre partie (1, 2), et **en ce que** le moyen d'étanchéité (13) est configuré pour s'ajuster étroitement contre le fond correspondant (7) lorsque les deux parties (1, 2) sont assemblées.

2. Plaque à rôtir selon la revendication 1, **caractérisée en ce que** le bord (9) de la seconde partie (2) inclut au moins une découpe (18) correspondant à la forme du premier dispositif d'arrêt (19) et agencée sur une distance prédéterminée de la seconde extrémité ouverte (11).

3. Plaque à rôtir selon la revendication 1 ou 2, **caractérisée en ce qu'**au moins l'un des dispositifs d'arrêts (19, 20) inclut une surface de contact (19a, 20a) agencée sur le côté opposé de la face d'appui (19b, 20b), le dispositif d'arrêt (19, 20) ayant une conception déformable de sorte que la surface de contact (19a, 20a) peut être mise en contact provisoirement avec le second dispositif d'arrêt (19, 20) lorsque l'on assemble les parties.

4. Plaque à rôtir selon l'une quelconque des revendications 1 à 3, **caractérisée en ce qu'**au moins l'une des parties (1, 2) inclut une pluralité de dispositifs d'arrêt (19, 20) agencés le long du bord (6, 9), **en ce qu'**au moins l'un des dispositifs d'arrêt (19, 20) a une conception déformable et inclut une face d'appui (19b, 20b) qui peut être mise en contact avec le second dispositif d'arrêt (20, 19) au niveau de la position extérieure.

5. Plaque à rôtir selon l'une quelconque des revendications 1 à 4, **caractérisée en ce que** le bord (6, 9) d'au moins l'une des parties (1, 2) inclut au moins une section de bride (14, 15, 16, 17) et **en ce qu'**au moins un moyen de verrouillage (21, 22, 23) est agencé dans la section de bride (14, 15, 16, 17).

6. Plaque à rôtir selon la revendication 5, **caractérisée en ce que** la seconde partie (2) inclut un premier moyen de verrouillage (21) agencé dans une section de bride (16), le premier moyen de verrouillage (21) ayant une conception déformable et incluant une face de contact qui peut être mise en contact avec une périphérie d'une section de bride (14) de la première partie (1) agencée sur l'extrémité ouverte (10) lorsque la première partie (1) est déplacée par rapport à la seconde partie (2) dans l'au moins une direction (3).

7. Plaque à rôtir selon la revendication 5 ou 6, **caractérisée en ce que** la seconde partie (2) inclut au moins un second moyen de verrouillage (22) ayant une conception déformable et qui inclut une face d'appui pour s'appuyer contre au moins un troisième moyen de verrouillage (23) agencé au niveau d'une section de bride (15) de la première partie (1).

8. Procédé d'assemblage et de séparation d'une plaque à rôtir selon l'une quelconque des revendications 1 à 7, incluant les étapes suivantes selon lesquelles une extrémité ouverte (10) d'une première partie (1) est tournée vers une extrémité ouverte (11) d'une seconde partie (2), **caractérisé en ce que** la première partie (1) est disposée sur le même plan que la seconde partie (2), après quoi la première partie (1) est déplacée dans une direction (26) parallèle à et partiellement sur la seconde partie (2), et **en ce qu'**un premier dispositif d'arrêt (19) sur la première partie (1) est déplacé au-delà d'un second dispositif d'arrêt (20) sur la seconde partie (2).

9. Procédé d'assemblage et de séparation d'une plaque à rôtir selon l'une quelconque des revendications 1 à 7, incluant les étapes suivantes selon lesquelles une extrémité ouverte (10) d'une première partie (1) est tournée vers une extrémité ouverte (11) d'une seconde partie (2), **caractérisé en ce que** la première partie (1) est disposée dans un plan parallèle à la seconde partie (2) et sur la seconde partie (2), après quoi la première partie (1) est déplacée dans une direction (25) perpendiculaire à et abaissée sur la seconde partie (2), après quoi la première partie (1) est déplacée dans une seconde direction parallèle à et partiellement distante de la seconde partie (2).
